(19) Europäisches Patentamt
European Patent Office
Office européen des brevets

(11) Publication number : **0 240 167 B1**

(12) **EUROPEAN PATENT SPECIFICATION**

(45) Date of publication of patent specification : **02.01.92 Bulletin 92/01**

(51) Int. Cl.$^5$ : **C04B 16/06,** D01F 6/04, C08L 23/02, C04B 20/10, D01F 8/06

(21) Application number : **87301818.8**

(22) Date of filing : **02.03.87**

(54) **Composition for preparing cement - reinforcing fibers.**

(30) Priority : **03.03.86 US 835705**

(43) Date of publication of application : **07.10.87 Bulletin 87/41**

(45) Publication of the grant of the patent : **02.01.92 Bulletin 92/01**

(84) Designated Contracting States : **BE DE FR GB IT NL**

(56) References cited :
**DE-A- 3 210 693**
**GB-A- 2 021 552**
**CHEMICAL ABSTRACTS, vol. 97, no. 24, December 1982, page 282, abstract no. 202486b, Columbus, Ohio, US; & JP-A-82 106 563 (KURARAY CO., LTD) 02-07-1982**

(56) References cited :
**CHEMICAL ABSTRACTS, vol. 87, no. 18, 31st October 1977, page 60, abstract no. 137224s, Columbus, Ohio, US; & JP-A-77 56 394 (MITSUBISHI RAYON CO., LTD) 09-05-1977**

(73) Proprietor : **EXXON CHEMICAL PATENTS INC.**
**1900 East Linden Avenue**
**Linden New Jersey 07036 (US)**

(72) Inventor : **Chow, Wai Yan**
**18214 Forest Town**
**Houston Texas 77084 (US)**
Inventor : **McAlpin, James John**
**1862 College Green**
**Houston Texas 77058 (US)**

(74) Representative : **Dew, Melvyn John et al**
**Exxon Chemical Limited Exxon Chemical Technology Centre P.O. Box 1**
**Abingdon Oxfordshire, OX13 6BB (GB)**

EP 0 240 167 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to a vinyl alcohol copolymer - polyolefin composition which renders polyolefins highly adherent for silicic surfaces. When compounded with a polyolefin the modifier composition of the invention provides a polyolefin resin from which cement adherent reinforcing fibers may be prepared which suitably substitute for asbestos fibers as a fibrous reinforcement for cement structures. Alternatively, the modifier composition may be applied as a coextruded surface coating to polyolefin fibers or as a surface layer to a polyolefin film from which fibers are prepared by fibrillation. The invention also relates to the cement adherent polyolefin fibers so prepared and to cementitious articles prepared with such cement adherent polyolefin reinforcing fibers.

Fibrous reinforcement is a well known method for improving the physical properties of cement and concrete structures. Asbestos fiber-reinforced cements have been widely employed as building materials. Asbestos-reinforced cements and concretes have long been used for the production of pipes, corrugated boards, roofing slates, machine foundations, storage tank walls, reactors, aircraft runways, roads, pilings and many other high strength articles. The type of asbestos which is satisfactory as fibrous reinforcement for cement is available in limited quantities. It is probable that the deposits of such workable asbestos will be exhausted relatively soon. Further, asbestos is now known to have carcinogenic effects. The carcinogenic properties of asbestos have lead to governmental regulations controlling and limiting its use.

Of the fibers currently used as an asbestos fiber replacement for cement reinforcement, polyacrylonitrile and polyvinyl alcohol fibers are preferred because they combine high fiber strength with good adhesion to a cement matrix. Unfortunately, both are expensive materials and significantly increase the cost of producing fiber reinforced cement structures.

A variety of other less-expensive materials have been considered for production of cement reinforcement fibers to replace asbestos fibers. Steel fibers have been tried and found inadequate because they suffer from chemical attack by the alkaline cement environment. Various polymeric fibers have also been found to be inadequate. Glass and polyester fibers degrade due to the alkaline environment of the cement matrix. Nylon and cellulose fibers have been found to be too water sensitive to be successfully used.

Ideally, polyolefin fibers could be employed as an asbestos replacement for reinforced cement. Polyolefin fibers possess good inherent properties, such as alkaline resistance, good stiffness and tensile strengths and are relatively inexpensive. Unfortunately, a major obstacle to the use of polyolefins as a cement reinforcing fiber material is their inherent lack of affinity towards an alkaline mineral matrix. Further, polyolefin fibers are less dense than a cement slurry and are not water wettable; that combination of properties makes it difficult to disperse the polyolefin fibers in the cement slurry during processing. Such poor dispersibility of polyolefin fibers results in poor reinforcement of a finished cementitious article.

Extensive efforts have been devoted to preparing polyolefin fibers, particularly polypropylene fibers, in a form which permits them to be successfully used as a replacement for asbestos fibers for reinforcement of cement and concrete structures.

Methods for fabricating polypropylene fibers in a way as to provide physical anchoring sites along the fibers for mechanical attachment of the cement matrix have been tried, as illustrated by U.S. Patent Nos. 4,261,754; 4,414,030 and 4,477,522. European Patent Application 0 026 581 discloses that such fibers may be prepared by fibrillation of a polyolefin film which has been pretreated with a coupling agent such as an acid anhydride or methacryloxypropyltrimethoxysilane. Other methods involve the addition of certain thickening and clay additives to the cement slurry to hold the polypropylene reinforcing fibers in dispersion until the slurry sets, as illustrated by U.S. Patent Nos. 4,363,666 and 4,428,775. Still another method to improve flocculation of polypropylene fibers when mixing with cement is to treat the cement-fiber mix with a water-soluble or emulsifiable polymer and a polyvalent salt such as $Al_2(SO_4)_3$, as illustrated by U.S. Patent No. 4,339,273.

Other procedures designed to render polypropylene fibers suitable as a cement reinforcing material involve the physical modification of the fiber surface by various means. To produce cement adherent fibers U.K. Patent Application No. 2,030,891 teaches a method for embedding inorganic powders in the surface of fibrillated polypropylene. Japanese Patent Publication No. 60 060 960 applies a fine aggregate to the fiber surface by means of a radiation hardenable epoxy binder to produce a cement adherent polypropylene reinforcing fiber.

Still other methods chemically treat the surface of polyolefin fibers to render the fiber surface more adherent to cement. Such methods include treatment of the polyolefin fibers with an aqueous dispersion of colloidal alumina or silica in conjunction with a chlorinated polypropylene, as taught by Japanese Patent Publication No. 7319849; a non-ionic or cationic polymer agglutinating agent such as a polyethylene oxide or poly(alkylaminoacrylate) as shown by Japanese Patent Publication No. 60 081 052; or a solution of an alkali or alkaline earth metal (bi) carbonate as disclosed in Belgian Patent No. 899,810.

Yet others have suggested chemical modifications of the base polyolefin from which the fibers are produced. Hence, U.K. Patent Application No. 2,021,552A states that an inorganic or organic acid

group should be incorporated in the base polyolefin, either by copolymerization of acid monomers or by grafting acid groups to a prepared polyolefin, in order to improve the adherence to cement of fibers made of modified polyolefin. Polypropylene grafted with maleic anhydride is illustrated as an example of an improved material for producing cement reinforcing fibers. Japanese Patent Publication No. 49 036 748 also illustrates the use of maleated polypropylene as a material for producing cement reinforcing fibers. Another approach, as discussed in German Offenlegungsschrift DE 3341 462 Al, treats the polyolefin under elevated temperature and pressure with a solution of silane or $SiCl_4$ together with silicic acid or a metal silicate and thereafter precipitates the reaction product as fibrils by lowering the temperature. The fibrils so produced are useful as asbestos fibers substitutes for reinforced cement structures.

Others have suggested that the surface of polyolefin fibers be catalytically reacted with reactive organic or inorganic Si (IV) compounds to render them adhesive to cement. Among the silanes disclosed as suitable for a method of this type are silicic acid anhydrides, organic halosilanes, and silicate esters as discussed in European Patent Application No. 0 051 256 and German Offenlegungsschrift DE 32 10693 Al.

To date, polyolefin fibers have been made compatible as reinforcement fiber for cement only by incorporating additional compatibilizing agents into the cement slurry into which the fibers are admixed, by the special fabrication of the fibers to provide physical anchoring sites therein for mechanically anchoring to the cement matrix, by the chemical modification of the base polyolefin from which the fibers are then produced, or by the chemical modification of the fiber surfaces by costly and time consuming chemical reactions.

Ideally an agent could be found which when admixed in small quantities with a polyolefin stock material would allow the direct production of cement adherent fibers therefrom by conventional fiber production techniques. In our copending European Patent Application No. 87300024.4, claiming priority from U.S. Application Serial No. 816,032, filed january 3, 1986, a composition useful for compounding with olefinic polymers which can provide cement adherent fibers is disclosed and claimed.

It has now been discovered that a modifier composition comprising the reaction product of a vinyl alcohol copolymer with a carboxylic acid or carboxylic acid anhydride modified polyolefin can be compounded with an olefinic polymer to provide a polyolefin resin from which cement-adherent fibers may be directly produced by conventional fiber fabricating techniques. The reaction product is obtainable by infirmately admixing the vinylalcohol copolymer with the modified polyolefin in the melt phase. A preferred modifier composition is the melt reaction product of a vinyl alcohol copolymer with 28 wt% ethylene with a maleated polypropylene.

The modifier composition may be dry blended in small amounts with an olefin homopolymer or copolymer to provide a polyolefin resin stock from which cement adherent fibers may be directly produced by conventional fiber extruding, spinning or fibrillation techniques. Alternatively, the modifier composition or a dilution thereof may be coextruded as a surface layer upon an olefin polymer film and cement adherent fibers may be produced from said film by fibrillation techniques.

Fibers produced from a polyolefin resin which incorporates a modifier composition of the invention are adherent to cements and concretes and may be used as a substitute for asbestos fibers for the fibrous reinforcement of cement and concrete articles. Polyolefin reinforcing fibers produced in accordance with the invention impart superior physical properties, particularly extensibility and toughness, to finished reinforced cement articles as compared to articles reinforced with fibers produced only from an acid modified polyolefin. In addition, the wettability of the fibers of this invention is enhanced, thus improving their dispersibility in the cement slurry during processing.

In the accompanying drawings:

Fig. 1 is the force-displacement curve obtained upon a bending test in a horizontal configuration of concrete test bars reinforced with 4 volume percent polypropylene fibers containing a modifier composition in accordance with the invention, and containing 1.65 wt% maleated polypropylene.

Any polyolefin may be rendered suitable for production of cement adherent fibers by the addition thereto of a modifier of the invention. Examples of suitable polyolefins are polyethylene, polypropylene, polybutene, olefinic copolymers, such as ethylene-butene or propylene-ethylene copolymers, olefinic terpolymers, such as propylene-ethylene-butene terpolymers, or mixtures and blends of the above olefinic polymers. In view of its good intrinsic physical and chemical properties polypropylene and it copolymers, such as its random copolymers with minor amounts of ethylene, is a preferred material for the production of concrete adhesive reinforcing fibers.

The modifier which is compounded with a polyolefin to render it adhesive to cement comprises a reaction product of an ethylene vinyl alcohol copolymer with a carboxylic acid or an hydride modified olefinic polymer, whic may be a homopolymer or copolymer, e.g., a terpolymer. Preferably the reaction is carried out in the melt phase. A vinyl alcohol copolymer is defined herein to mean a polymer with the following structure:

$$H-(\underset{\underset{OH}{|}}{CH_2}CH_2)_m-R_n-H$$

wherein R is any comonomer polymerizable via a free radical route which lowers the melting point of the copolymer sufficiently to allow its melt processing. Examples of such comonomers are ethylene, styrene and vinyl acetate. The 'm' and 'n' refer to the numbers of each monomer unit in the chain. In the preferred composition of this invention, 'm' is in the range of 500-200, preferably 400, and 'n' is in the range of 500-200, preferably 300. Preferably, 'm' plus 'n' will be about 700. Preparation of the ethylene copolymers is described in U.S. Patent 3,925,336, assigned to Nippon Gohsei Co. of Japan.

The distribution of the comonomers along the chain can range from random to blocked, provided only that the resulting copolymer retains its melt processability. Compositions which are preferred in the present application range from about 25 mol% vinyl alcohol to about 90 mol% vinyl alcohol with the range 45-85 mol% being more preferred.

A carboxylic acid or carboxylic acid anhydride modified polyolefin as defined herein means an olefinic homopolymer, copolymer or terpolymer which preferably contains from about 0.1 wt% to about 4.0 wt% acid functional groups as free carboxylic acid or as carboxylic acid anhydride.

A polyolefin resin for production of cement adherent fibers may readily be prepared by blending the modifier composition with an olefinic polymer. The modifier is intimately and homogeneously admixed with the base polyolefin compound to form a resin from which fibers are subsequently produced. Fibers produced from such modified polyolefin resin exhibit a rougher surface texture than fibers produced from a polyolefin not containing the modifier agent. This is believed to be due to the migration of the modifier agent from the polymer matrix of the fiber core to the surface of the fiber during fiber forming or film production from the resin. This migration or blooming phenomena is believed to account for the fact that a small amount of the modifier agent may be incorporated into a polyolefin resin yet significantly increased adhesion of fibers produced therefrom towards cement is still achieved.

The modified polyolefins which may be employed to produce the modifier agents of the invention may be modified poly alpha-olefins or mixtures thereof, such as modified polyethylene, polypropylene, polybutene-1, and olefinic copolymers. The modified polyolefins are known materials and may be prepared by known procedures, as disclosed for example in U.S. Patent No. 2,973,344. The unsaturated alpha-beta carboxylic acids and acid anhydrides useful for forming the modified polyolefins are exemplified by acrylic acid, maleic acid, fumaric acid, itaconic acid, citraconic acid, methacrylic acid, crotonic acid, isocrotonic acid, maleic anhydride, itaconic anhydride, citraconic anhydride, and himic anhydride. Preferably, to insure that the modifier produced from such modified polyolefins will readily migrate or bloom to the surface of a polyolefin fiber, the polyolefin portion of the modified polyolefin used to produce the modifier desirably has a number average molecular weight of from about 2,500 to about 50,000. If the number average molecular weight of the polyolefin portion of the modified polyolefin exceeds about 50,000 there is a reduction in effectiveness. Of course, modified polyolefins having a number average molecular weight in excess of 50,000 may be used to prepare modifiers of the invention, but in such case it is desirable to incorporate such higher number average molecular weight modifier composition into the base polyolefin as a coextruded layer upon a polyolefin film from which fibers are subsequently produced by fibrillation.

Alternatively, if the modified polyolefin is a polyethylene it may be produced by the copolymerization of ethylene monomer with preferably from about 0.1 to about 4 weight percent of a carboxylic acid olefin comonomer. Examples of copolymer suitable as the acid modified polyolefin include copolymer of ethylene with acrylic acid, methacrylic acid, itatonic acid, malonoic acid and methylmethacrylit acid.

The acid content of the modified polyolefin is preferably from about 0.1 to about 4.0 weight percent. As noted, the number average molecular height of the polyolefin component is generally in the range of from about 2,500 to about 50,000. The content of the acid component should preferably be selected to provide on the average from 0.1 to 2.0 pendant acid groups per polymer chain. Although modified polyolefin may be used which has an acid content which exceeds on the average two pendant acid groups per polymer chain, generally no significant additional benefit is observed from the excess amount of acid component. The preferred modified polyolefin is a maleic anhydride modified polypropylene, such as a 25,000 number average molecular weight polypropylene with a succinic anhydride content of about 0.25 wt%.

The modifier composition is prepared by dry blending a suitable modified polyolefin, preferably in powder form, with the vinyl alcohol copolymer preferably in amounts calculated to yield from about 0.1 to about 2, and preferably from about 0.2 to about 1 modified polypropylene chains per vinyl alcohol copolymer chain. When the modified polyolefin is a maleated polypropylene containing about 0.25 wt% maleic anhydride, it is preferably blended with an ethylene vinyl alcohol copolymer of about 28 wt% ethylene and with degree of polymerization about 700 in a weight ratio of about 2:5. The resulting blend can

be extruded directly or mixed with additional polypropylene and extruded under normal conditions such as at a temperature of about 425°F (218°C) and a residence time about 1-3 minutes during which operation the reaction of the maleated PP and the EVOH alcohol copolymer is essentially complete. An amount of unmodified polypropylene may be added to the blend prior to extrusion to enhance extrudability, if required.

A polyolefin resin for production of cement adherent fibers is prepared by mixing polyolefin, such as polypropylene, preferably having a melt index (ASTM D1238L) from about 2 to about 50, with from about 1 to about 10 wt% of the modifier composition. More preferably the polypropylene has a melt index (measured at 230°C) of from about 2 to about 10. Generally, modifier contents of from about 2 to about 6 wt% provide the resulting polyolefin resin with more than adequate adhesion toward cement as well as improved wettability. The modifier may be compounded with the polyolefin in a single-screw or twin-screw extruder of co-rotating or counter-rotating design, extruded to strands and pelletized by a hot die face cutting or a cold cutting system. At this point, it may also be desirable to add a filler such as calcium carbonate to adjust the density of the resin to improve its dispersibility in the cement slurry.

The pelletized modified resin may be used as the feed stock for fiber production by any of the conventional fiber forming methods. Filaments of the so modified polyolefin resin may be prepared by melt-spinning techniques or by film slitting.

The cement adherent reinforcing fibers formed from the modified polyolefin resin are preferably prepared as a 1 to 100 denier fiber, more preferably from about 2 to about 80 denier, with the preferred fiber size being dictated by the details of the cementitious matrix. The fibers may be prepared in any length, but lengths of from about 1/8 to 3 inches (0.32 to 7.6 cm) are preferred, and most preferred are fiber lengths of from about 1/8 to 1 inch (0.32 to 2.54 cm).

Cement adherent polyolefin reinforcing fibers prepared in accordance with the invention are suitable for reinforcement of all common cement compositions, such as Portland cements, marble cement, puzzolanic cement, trass cement, blast furnace cement, gypsum cements, calcium silicates and others. In addition to the reinforcing polyolefin fibers of the invention, the cement composition may contain further additives and fillers such as fly ash, limestone, quartz, pearlite, rock wool, cellulose, diatomaceous earth, flue dust, pozzolana or mixtures thereof.

Reinforced cement articles are prepared by mixing polyolefin reinforcing fibers of the invention with the cement slurry in fiber amounts of from about 0.5 to about 20 percent by volume (dry basis), preferably from about 1 to about 10 percent by volume, and most preferably in fiber amounts from about 2 to about 8 percent by volume. In order to obtain more uniform dispersion of the reinforcing fibers, one can employ known inert, dense fillers such as $CaCo_3$, talc and the like in the resin formulation.

## Example

A modifier composition was prepared by dry blending 16 parts by weight of an ethylene vinyl alcohol copolymer with about 28 wt% ethylene and a number average molecular weight of about 25,000 and 7 parts by weight of maleated polypropylene containing about 0.25 wt% succinic anhydride and having a melt index of about 500 with 77 parts by weight of a 3 melt index (measured at 230°C) polypropylene and pelletizing the resulting blend in a small single screw extruder. This pelletized composition was then blended in a ratio of 1 to 4 with the same base polypropylene and the final blend was then extruded.

The resulting pelletized modified polypropylene resin was then extruded into film; the film was oriented, fibrillated and chopped into staple fiber of about 20 denier and 6mm length. This staple was randomly dispersed in a concrete made by mixing Portland cement type P-40, fine sand type 0000 and water (according to Norm NBN B.12-208; consistency 1.5 as described in Norm NBN B 14-207). The fiber was present in the final formulation to the extent of 4 volt. Test bars of 15.5 cm length, 2 cm width and 1 cm height were molded from the concrete. The bars were cured in water and then in a wet chamber (as per Norm NBN B-12-208).

A comparison sample was prepared by producing staple fibers in a manner identical to that described above from a compound of a 3 melt index polypropylene and a maleic anhydride modified polypropylene with an acid number of 43. The compound contained 1.65 wt% of the acid modified polypropylene. The addition of acid modified polypropylene to fiber compositions of the type used here has been found to improve their adhesion to cement. Thus, this comparison standard is more stringent than an unmodified polypropylene case.

The cured bars were then subjected to a bending test in a horizontal configuration with a support near each end of the bar and the load applied from the top in the center of the bar. The force-displacement results are displayed in Figure 1. Figure 1 gives the results for the bars reinforced with the modified polypropylene fibers of the present invention and the results for the comparison sample using a polypropylene fiber containing 1.65 wt% maleated polypropylene.

In a test of this type, the area under the force-displacement curve correlates directly with toughness and extensibility in actual application. Comparing the two curves of Figure 1, an increase of at least 100% is seen in this critical area measurement in going from the acid modified fiber specimen to the material based

on the fibers of the present invention.

## Claims

1. modifier useful for rendering polyolefin adherent to cement or concrete, comprising the reaction product of a vinyl alcohol copolymer with a carboxylic acid or - carboxylic acid anhydride - modified polyolefin, said reaction product being obtainable by intimately admixing the copolymer with the modified polyolefin in the melt state.

2. The modifier of claim 1 wherein the modified polyolefin has a number average molecular weight of from 2,500 to 50,000.

3. The modifier of claim 1 or 2 wherein the modified polyolefin comprises from 0.1 to 4.0 weight percent acid functional groups as free carboxylic acid or carboxylic anhydride.

4. The modifier of claim 1, 2, or 3 wherein the modified polyolefin is polyolefin modified with maleic acid or maleic anhydride.

5. The modifier of any preceding claim wherein the modified polyolefin is modified polypropylene.

6. The modifier of claims 4 and 5 wherein the modified polyolefin is a maleated prlypropylene.

7. The modifier of claim 1, 2, or 3 wherein the modified polyolefin comprises a copolymer of ethylene with, as comonomer, an olefinic carboxylic acid.

8. The modifier of claim 7 wherein the comonomer comprises acrylic, methacrylic, itaconic, malonic, or methylmethacrylic acid.

9. The modifier of any preceding claim wherein the vinyl alcohol copolymer contains 25-90 mol% vinyl alcohol units.

10. The modifier of claim 9 wherein the vinyl alcohol contains 45-85 mol% vinyl alcohol units.

11. The modifier of any preceding claim wherein the comonomer of the vinyl alcohol copolymer comprises ethylene, styrene or vinyl acetate.

12. The modifier of claim 11 wherein the vinyl alcohol copolymer is an ethylene vinyl alcohol copolymer comprising about 28 wt% ethylene and with number average molecular weight of about 25,000.

13. The modifier composition of claim 12 wherein the modified polyolefin is maleated polypropylene containing about 0.25 weight percent anhydride.

14. The modifier of any preceding claim wherein the reaction product comprises from 0.1-2.0 modified polyolefin chains per vinyl alcohol copolymer chain.

15. The modifier of any preceding claim wherein the reaction product comprises from 0.1-2.0 pendant carboxylic acid groups per polymer chain.

16. A method for producing a modifier according to any preceding claim, which modifier, when admixed with a polyolefin, renders said polyolefin adherent to cement or concrete, comprising intimately admixing a vinyl alcohol copolymer with a carboxylic acid- or carboxylic acid anhydride- modified polyolefin in the melt state.

17. The method of claim 16 wherein the modified polyolefin is admixed in an amount of from 0.1 to 2.0 chains per vinyl alcohol copolymer chain.

18. A polyolefin resin from which cement or concrete adherent fibers may be produced, comprising:

(1) from 90 wt% to 99 wt% of an olefinic polymer; and

(2) from 1 wt% to 10 wt%, in intimate admixture with said olefinic polymer, of a modifier according to any of claims 1-15 or produced by the method of claim 16 or 17.

19. The polyolefin resin of claim 18 wherein the olefinic polymer is polypropylene.

20. The polyolefin resin of claim 18 or 19 wherein the polyolefin has a melt index of from 2 to 50.

21. The polyolefin resin of claim 20 wherein the polyolefin has a melt index at 230°C of from 2 to 10.

22. Fibers which are adherent to cement or concrete, when formed from a polyolefin resin according to any one of claims 18 to 21.

23. The fibers of claim 22 which are from 2 to 80 denier.

24. Polyolefin fibers comprising an olefinic polymer and, as a surface layer thereon, a modifier according to any one of claims 1-15 or produced by the method of claims 16 or 17.

25. The fibers of claim 24 wherein the modifier comprises a coextruded surface coating on the olefinic polymer.

26. The fibers of claim 24 which comprise a film of the olefinic polymer carrying a surface layer of the modifier, which coated film has been subjected to fibrillation.

27. A fiber reinforced cement article comprising cement having in intimate admixture therein from 0.5 to 20 percent by volume of fibers according to any one of claims 22 - 26.

## Patentansprüche

1. Modifizierungsmittel, das brauchbar ist, um polyolefin an Zement oder Beton haftend zu machen, und das Reaktionsprodukt aus einem vinylalkoholcopolymer mit einem mit Carbonsäure oder Carbonsäureanhydrid modifizierten Polyolefin umfaßt, wobei das Reaktionsprodukt durch inniges Vermischen des Copolymeren mit dem modifizierten Polyolefin im Schmelzzustand erhältlich ist.

2. Modifizierungsmittel nach Anspruch 1, bei dem das modifizierte Polyolefin ein durchschnittliches zahlenmäßiges Molekulargewicht von 2 500 bis 50 000 hat.

3. Modifizierungsmittel nach Anspruch 1 oder 2,

bei dem das modifizierte Polyolefin 0,1 bis 4,0 Gew.-% funktionelle Gruppen als freie Carbonsäure oder freies Carbonsäureanhydrid umfaßt.

4. Modifizierungsmittel nach Anspruch 1, 2 oder 3, bei dem das modifizierte Polyolefin ein mit Maleinsäure oder Maleinsäureanhydrid modifiziertes Polyolefin ist.

5. Modifizierungsmittel nach einem der vorhergehenden Ansprüche, bei dem das modifizierte Polyolefin modifiziertes Polypropylen ist.

6. Modifizierungsmittel nach Anspruch 4 und 5, bei dem das modifizierte Polyolefin ein mit Maleinsäure oder Maleinsäureanhydrid modifiziertes Polypropylen ist.

7. Modifizierungsmittel nach Anspruch 1, 2 oder 3, bei dem das modifizierte Polyolefin ein Copolymer aus Ethylen mit einer olefinischen Carbonsäure als Comonomer umfaßt.

8. Modifizierungsmittel nach Anspruch 7, bei dem das Comonomer Acryl-, Methacryl-, Itacon-, Malon- oder Methylmethacrylsäure umfaßt.

9. Modifizierungsmittel nach einem der vorhergehenden Ansprüche, bei dem das Vinylalkoholcopolymer 25 bis 90 Mol% Vinylalkoholeinheiten enthält.

10. Modifizierungsmittel nach Anspruch 9, bei dem der Vinylalkohol 45 bis 85 Mol% Vinylalkoholeinheiten enthält.

11. Modifizierungsmittel nach einem der vorhergehenden Ansprüche, bei dem das Comonomer des Vinylalkoholcopolymeren Ethylen, Styrol oder Vinylacetat umfaßt.

12. Modifizierungsmittel nach Anspruch 11, bei dem das Vinylalkoholcopolymer ein Ethylen-Vinylalkohol-Copolymer ist, das etwa 28 Gew.-% Ethylene umfaßt und ein durchschnittliches zahlenmäßiges Molekulargewicht von etwa 25 000 hat.

13. Modifizierungsmittelzusammensetzung nach Anspruch 12, bei der das modifizierte Polyolefin ein mit Maleinsäure oder Maleinsäure modifiziertes Polypropylen ist, das etwa 0,25 Gew.-% Anhydrid enthält.

14. modifizierungmittel nach einem der vorhergehenden Ansprüche, bei dem das Reaktionsprodukt 0,1 bis 2,0 modifizierte Polyolefinketten pro Vinylalkoholcopolymerkette umfaßt.

15. Modifizierungsmittel nach einem der vorhergehenden Ansprüche, bei dem das Reaktionsprodukt pro Polymerkette 0,1 bis 2,0 seitliche Carbonsäuregruppen umfaßt.

16. Verfahren zur Herstellung eines Modifizierungmittels gemäß einem der vorhergehenden Ansprüche, das wenn es mit einem Polyolefin vermischt ist, das Polyolefin an Zement oder Beton haftend macht, bei dem ein Vinylalkoholcopolymer mit einem mit Carbonsäure oder Carbonsäureanhydrid modifizierten Polyolefin im Schmelzustand innig vermischt wird.

17. Verfahren nach Anspruch 16, bei dem das modifizierte Polyolefin in einer Menge von 0,1 bis 2,0 Ketten pro Vinylalkoholcopolymerkette vermischt wird.

18. Polyolefinharz, aus dem an Zement- oder Beton haftende Fasern hergestellt werden können und das:

(1) 90 Gew.-% bis 99 Gew.-% eines olefinischen Polymeren, und

(2) 1 Gew.-% bis 10 Gew.-% eines Modifizierungsmittels gemäß einem der Ansprüche 1 bis 15 oder hergestellt nach dem Verfahren gemäß Anspruch 16 oder 17 in inniger Vermischung mit dem olefinischen Polymeren umfaßt.

19. Polyolefinharz nach Anspruch 18, bei dem das olefinische Polymer Polypropylen ist.

20. Polyolefinharz nach Anspruch 18 oder 19, bei dem das Polyolefin einen Schmelzindex von 2 bis 50 hat.

21. Polyolefinharz nach Anspruch 20, bei dem das Polyolefin bei 230°C einen Schmelzindex von 2 bis 10 hat.

22. Fasern, die an Zement oder Beton haften und aus einem Polyolefinharz gemäß einem der Ansprüche 18 bis 21 gebildet sind.

23. Fasern nach Anspruch 22, die eine Feinheit von 2 bis 80 Denier aufweisen.

24. Polyolefinfasern, die ein olefinisches Polymer und als Oberflächenschicht darauf ein Modifizierungsmittel gemäß einem der Ansprüche 1 bis 15 oder hergestellt nach dem Verfahren gemäß Anspruch 16 oder 17 umfassen.

25. Fasern nach Anspruch 24, bei denen das Modifizierungsmittel eine coextrudierte Oberflächenbeschichtung auf dem olefinischen Polymer umfaßt.

26. Fasern nach Anspruch 24, die eine Folie des olefinischen Polymeren umfassen, die eine Oberflächenschicht des Modifizierungsmittels trägt, wobei die beschichtete Folie einer Fibrillationsbehandlung unterworfen worden ist.

27. Faserverstärkter Zemmentgegenstand, der Zement umfaßt, in dem in inniger Versmischung 0,5 bis 20 Vol.-% Fasern gemäß einem der Ansprüche 22 bis 26 enthalten sind.

## Revendications

1. Modificateur utile pour faire adhérer une polyoléfine au ciment ou au béton, qui comprend le produit de réaction d'un copolymère d'alcool vinylique avec une polyoléfine modifiée par un acide carboxylique ou par un anhydride d'acide carboxylique, ledit produit de réaction pouvant être obtenu par mélange intime du copolymère avec la polyoléfine modifiée à l'état fondu.

2. Modificateur suivant la revendication 1, dans lequel la polyoléfine modifiée a une moyenne numérique du poids moléculaire de 2500 à 50 000.

3. Modificateur suivant la revendication 1 ou 2,

dans lequel la polyoléfine modifiée comprend 0,1 à 4,0 % en poids de groupes fonctionnels acides sous forme d'acide carboxylique libre ou d'anhydride carboxylique.

4. Modificateur suivant la revendication 1, 2 ou 3, dans lequel la polyoléfine modifiée est une polyoléfine modifiée par l'acide maléique ou l'anhydride maléique.

5. Modificateur suivant l'une quelconque des revendications précédentes, dans lequel la polyoléfine modifiée est un polypropylène modifié.

6. Modificateur suivant les revendications 4 et 5, dans lequel la polyoléfine modifiée est un polypropylène transformé en maléate.

7. modificateur suivant la revendication 1, 2 ou 3, dans lequel la polyoléfine modifiée comprend un copolymère d'éthylène avec, comme comonomère, un acide carboxylique oléfinique.

8. Modificateur suivant la revendication 7, dans lequel le comonomère comprend l'acide acrylique, méthacrylique, itaconique, malonique ou méthylméthacrylique,

9. Modificateur suivant l'une quelconque des revendications précédentes, dans lequel le copolymère d'alcool vinylique contient 25 à 90 moles % de motifs alcool vinylique.

10. Modificateur suivant la revendication 9, dans lequel l'alcool vinylique contient 45 à 85 moles % de motifs alcool vinylique.

11. Modificateur suivant l'une quelconque des revendications précédentes, dans lequel le comononmère du copolymère d'alcool vinylique comprend l'éthylène, le styrène ou l'acétate de vinyle.

12. Modificateur suivant la revendication 11, dans lequel le copolymère d'alcool vinylique est un copolymère éthylène et ayant une moyenne numérique du poids molèculaire d'environ 25 000.

13. Composition modificatrice suivant la revendication 12, dans laquelle la polyoléfine modifiée est un polypropylène transformé en maléate contenant environ 0,25 % en poids d'anhydride.

14. Modificateur suivant l'une quelconque des revendications précédentes, dans lequel le produit de réaction comprend 0,1 à 2,0 chaînes polyolèfiniques modifiées par chaîne de copolymère d'alcool vinylique.

15. Modificateur suivant l'une quelconque des revendications précédentes, dans lequel le produit de réaction comprend 0,1 à 2,0 groupes acide carboxylique latéraux par chaîne polymérique.

16. Procédé de production d'un modificateur suivant l'une quelconque des revendications précédentes, modificateur qui, lorsqu'il est mélangé avec une polyoléfine, rend cette polyoléfine capable d'adhérer au ciment ou au béton, qui consiste à mélanger intimement un copolymère d'alcool vinylique avec une polyoléfine modifiée par un acide carboxylique ou un anhydride d'acide carboxylique, à l'état fondu.

17. Procédé suivant la revendicaton 16, dans lequel la polyoléfine modifiée est mélangée en une quantité de 0,1 à 2,0 chaînes par chaîne de copolymère d'alcool vinylique.

18. Résine polyoléfinique à partir de laquelle des fibres adhérant au ciment ou au béton peuvent être produites, comprenant :

(1) 90 à 99 % en poids d'un polymère oléfinique, et

(2) 1 à 10 % en poids, en mélange intime avec ledit polymère oléfinique, d'un modificateur suivant l'une quelconque des revendications1 à 15 ou produit par le procédé suivant la revendication 16 ou 17.

19. Résine polyoléfinique suivant la revendication 18, dans laquelle le polymère oléfinique est un polypropylène.

20. Résine polyoléfinique suivant la revendication 18 ou 19, dans laquelle la polyoléfine a un indice de fluidité de 2 à 50.

21 Résine polyoléfinique suivant la revendication 20, dans laquelle la polyoléfin a un indice de fluidité à 230°C ayant une valeur de 2 à 10.

22. Fibres adhérant au ciment ou au béton, formées à partir d'une résine polyoléfinique suivant l'une quelconque des revendications 18 à 21.

23. Fibres suivant la revendication 22, qui ont un dernier de 2 à 80.

24. Fibres polyoléfiniques, comprenant un polmère oléfinique et, comme couche de surface sur ce polymère, un modificateur suivant l'une quelconque des revendications 1à 15 ou produit par le procédé suivant la revendication 16 ou 17.

25. Fibres suivant la revendication 24, dans lesquelles le modificateur comprend un revêtement de surface coextrudé formé sur le polymère oléfinique.

26. Fibres suivant la revendication 24, qui comprennent un film du polymère oléfinique portant une couche de surface du modificateur, ce film revêtu ayant été soumis à une fibrillation.

27. Article en ciment renforcé par des fibres, comprenant du ciment renfermant en mélange intime 0,5 à 20 % en volume de fibres suivant l'une quelconque des revendications 22 à 26.

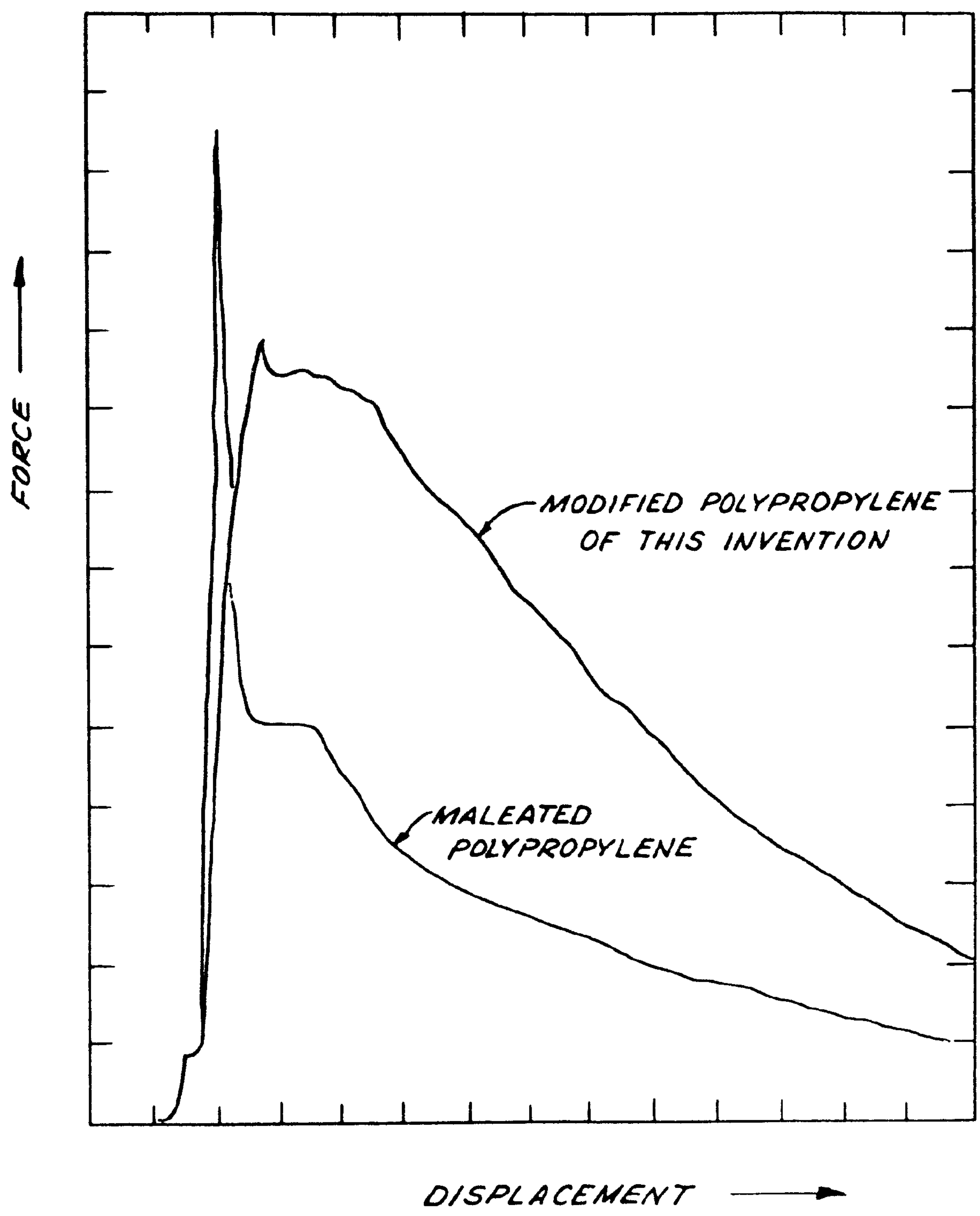
FORCE
MODIFIED POLYPROPYLENE
OF THIS INVENTION
MALEATED
POLYPROPYLENE
DISPLACEMENT